# EUROPÄISCHE PATENTSCHRIFT

(11) **EP 3 203 109 B1**
(45) Veröffentlichungstag und Bekanntmachung des Hinweises auf die Patenterteilung: **10.04.2019**
(21) Anmeldenummer: 16153918.4
(22) Anmeldetag: 02.02.2016
(51) Int. Cl.: F16F 15/305

(54) **ZYLINDERFÖRMIGER ROTATIONSKÖRPER UND VERFAHREN ZUR HERSTELLUNG EINES ZYLINDERFÖRMIGEN ROTATIONSKÖRPERS**
CYLINDRICAL ROTATING BODY AND METHOD FOR MANUFACTURING CYLINDRICAL ROTATING BODY
ÉLEMENT ROTATIF CYLINDRIQUE ET MÉTHODE DE FABRICATION DE L'ÉLEMENT ROTATIF

(43) Veröffentlichungstag der Anmeldung: 09.08.2017
(73) Patentinhaber: Enrichment Technology Company Ltd. Zweigniederlassung Deutschland, 52409 Jülich (DE)
(72) Erfinder: Otremba, Frank, 52223 Stolberg (DE)
(74) Vertreter: Gillen, Clemens

(56) Entgegenhaltungen:
- EP-A1- 0 391 222
- EP-A1- 1 191 253
- US-A- 5 061 533
- US-A1- 2010 018 344
- US-B1- 6 350 204

## Beschreibung

### Gebiet der Erfindung

Die Erfindung betrifft einen Rotationskörper, einen Rotor und einen Schwungradenergiespeicher mit solchen Rotationskörpern sowie ein Verfahren zur Herstellung eines solchen Rotationskörpers.

### Hintergrund der Erfindung

Schwungräder werden für die Energiespeicherung in Form von Rotationsenergie verwendet. Über geeignete Einkopplungsmittel (Motor-Generator-Einheiten) kann elektrische Energie in diesen Energiespeichern in Form von Rotationsenergie gespeichert und bei Bedarf wieder zurück in elektrische Energie umgewandelt und an einen Verbraucher abgegeben werden. Derartige Schwungradenergiespeicher haben größtenteils einen massereichen Rotor, der entsprechend seiner Drehzahl und Masse eine bestimmte Menge an Energie speichert. Die Speicherkapazität eines solchen Energiespeichers ist durch seine Masse und seine maximale Drehzahl begrenzt. Der Rotor ist dabei meistens über geeignete Verbindungsmittel mit einer Lagerwelle verbunden, die den Rotor hält. Die Lagerwelle ist in entsprechenden Lagern drehbar gelagert. Die Lager- und Antriebselemente befinden sich dabei vorzugsweise auf der Rotationsachse des Rotors. Die Verbindungsmittel haben dabei die Aufgabe, eine Verbindung und Fixierung zwischen dem äußeren Schwungradkörper (Rotationskörper) mit der Laufachse (Welle) herzustellen sowie für die Übertragung des Torsionsmoments von der Antriebswelle auf den Schwungradkörper (Rotationskörper) und umgekehrt zu sorgen. Für einen zuverlässigen und störungsfreien Betrieb der Rotoren müssen die Rotationskörper eine hohe Fertigungsqualität, Festigkeit und Biegesteifigkeit aufweisen.

Bisher werden Rotoren mit Rotationskörpern in der Regel als scheibenförmige, sehr dickwandige Bauteile ausgeführt. Die Wanddicke der Rotationskörper liegt dabei in der gleichen Größenordnung wie der Durchmesser, die Länge entlang der Rotationsachse ist dabei kleiner oder ähnlich dem Durchmesser. Die Verbundwerkstoffen (sogenannte CFK-Materialien) als Rotationskörpermaterial meist aus nahezu in Umfangsrichtung liegenden Fasern hergestellt.

Da die Energiespeicherkapazität quadratisch von der Rotationsgeschwindigkeit der Masse abhängt, hat dieses Konzept einige Nachteile. Die Fasern, die relativ weit innen (nahe der Rotationsachse) liegen, haben eine deutlich geringere Rotationsgeschwindigkeit und können somit kaum Energie speichern. Weiterhin entstehen durch diesen Aufbau große radiale Zugspannungen, die die Rotoren schädigen können. Dies kann nur durch aufwändige konstruktive Maßnahmen wie durch Fertigung mehrerer Sub-Ringe und Verpressen dieser zu einem Rotationskörper vermieden werden. Durch die Dickwandigkeit ist zudem die Fertigung extrem schwierig und aufwändig, sodass es dabei immer wieder zu Problemen zum Beispiel mit Faserknicken, Faservolumengehalt, Welligkeiten und Delamination kommt.

EP 0 391 222 A1 offenbart eine Stabilisatoranordnung für Fahrzeuge, umfassend ein an jedem seiner Enden mit einem Arm versehenes Torsionselement, wobei ein als Faserverbundrohr aus mehreren Lagen mit Harzen benetzten, aufgewickelten Faserbündeln ausgebildetes Torsionsrohr insbesondere in seinen Endbereichen, durch zumindest eine zusätzlich aufgewickelte Lage und /oder durch zumindest eine in diesen Bereichen mit einem vergrößerten Wickelwinkel (d.h. geringerer Steigung) als im zwischenliegenden Arbeitsbereich gewickelte Lage aus Faserbündeln aus- bzw. angeformte Verstärkungen als Befestigungs-bzw. Ansatzstellen für die aus, insbesondere gegossenem oder umgeformtem Metall, bestehenden Arme aufweist und im Arbeitsbereich des Torsionsrohres eine Umhüllungsschicht aus gewebeverstärktem (Weich)Kunststoff aufgebracht ist. Bei einem Verfahren zur Herstellung von Stabilisatoranordnungen für Fahrzeuge können auf einen verlorenen Kern, der gebogene und/oder abgebogene Arme aufweisen kann, Faserbündel mit Harzen gewickelt, in Form gebracht bzw. formjustiert und daraufhin ausgehärtet werden.

Regenerative Energiequellen werden heutzutage gerade aufgrund der besseren Umweltverträglichkeit gegenüber konventionellen Energieerzeugungseinrichtungen vermehrt aufgebaut. Da diese regenerativen Energiequellen in der Regel ihre Energie nicht kontinuierlich liefern, besteht ein großer Bedarf an Energiespeichern. Es ist daher wünschenswert, wenn der Energieinhalt eines solchen SchwungradEnergiespeichers noch weiter gesteigert und die Kosten für deren Herstellung dennoch gesenkt werden können. US 5061533 A wird als nächstliegender Stand der Technik angesehen. US 5061533 A offenbart einen innen hohlen zylinderförmigen Rotationskörper mit einem zumindest zum Teil aus Faserverbundmaterial gewickelten Zylindermantel, einer Zylinderachse als Rotationsachse und offenen Zylinderdeckelflächen, wobei der Zylindermantel mit einer Innenseite zugewandt zur Rotationsachse und einer entgegengesetzt ausgerichteten Außenseite eine Länge parallel zur Rotationsachse von mehr als dem zweifachen des Außendurchmessers des Rotationskörpers besitzt und eine Wanddicke aufweist, die kleiner als 15% des Außendurchmessers ist, wobei das Faserverbundmaterial des Zylindermantels einen Schichtaufbau in radialer Richtung besitzt, der mehrere sich entlang der Rotationsachse erstreckende Helixlagen aus Fasern mit einer Faserrichtung entlang eines Helix-Faserwinkels kleiner 35 Grad zur Rotationsachse und tangential dazu über die Länge des Zylindermantels angeordnete Umfangslagen aus Fasern mit einer Faserrichtung entlang eines Umfangs-Faserwinkels größer 80 Grad zur Rotationsachse umfasst, wobei die Helix-Faserwinkel zwischen 15 Grad und 30 Grad betragen.

### Zusammenfassung der Erfindung

Es ist eine Aufgabe der vorliegenden Erfindung, geeignete kostengünstige und zuverlässige Rotoren für Schwungrad-Energiespeicher zur Verfügung zu stellen, mit denen der Schwungrad-Energiespeicher einen großen Energieinhalt besitzen und dessen Fertigung und Betrieb dennoch leicht, kostengünstig und zuverlässig durchgeführt werden kann.

Diese Aufgabe wird gelöst durch einen innen hohlen zylinderförmigen Rotationskörper mit einem zumindest zum Teil aus Faserverbundmaterial gewickelten Zylindermantel, einer Zylinderachse als Rotationsachse und offenen Zylinderdeckelflächen, wobei der Zylindermantel mit einer Innenseite zugewandt zur Rotationsachse und einer entgegengesetzt ausgerichteten Außenseite eine Länge parallel zur Rotationsachse von mehr als dem zweifachen des Außendurchmesser des Rotationskörpers besitzt und eine Wanddicke aufweist, die kleiner als 15% des Außendurchmessers wobei das Faserverbundmaterial des Zylindermantels einen Schichtaufbau in radialer Richtung besitzt, der mehrere sich entlang der Rotationsachse erstreckende Helixlagen aus Fasern mit einer Faserrichtung entlang eines Helix-Faserwinkels kleiner 35 Grad zur Rotationsachse und mehrere tangential dazu über die Länge des Zylindermantels angeordnete Umfangslagen aus Fasern mit einer Faserrichtung entlang eines Umfangs-Faserwinkels größer 80 Grad zur Rotationsachse umfasst, wobei die Helixlagen und die Umfangslagen abwechselnd übereinander angeordnet sind, wobei die Helix-Faserwinkel (FWH) zwischen 15 Grad und 30 Grad betragen, sich die Helix-Faserwinkel (FWH, FWH1, FHW2, FHW3) unterschiedlicher Helixlagen (H, H1, H2, H3) unterscheiden und in radialer Richtung (RR) mit wachsendem Abstand zur Rotationsachse (R) von Helixlage (H, H1, H2, H3) zu Helixlage (H, H1, H2, H3) zunehmen.

Der Energiegehalt des Rotationskörpers wird dabei durch die Masse und die Rotationsgeschwindigkeit bestimmt. Die Geschwindigkeit geht dabei quadratisch in den Energiegehalt ein. Zylinderförmige Rotationskörper mit einem Zylindermantel mit geringer Wanddicke sind vorteilhaft, da bei diesen Rotoren die gesamte Masse nahezu auf gleichem Radius (mittlerer Radius +/- halber Wanddicke, die eben gering gehalten wird) rotiert und somit alle Fasern in gleicher Weise zur Energiespeicherung beitragen. Daher ist die Effizienz des Rotationskörpers in einem Schwungradenergiespeicher bezogen auf den Fasereinsatz besonders groß im Gegensatz zu konventionellen Bauformen mit scheibenförmigen dickwandigen Rotoren. Um den Energiegehalt bei einem vorgegebenen Radius des Rotationskörpers zu maximieren, wird der Rotationskörper möglichst lang (lange Zylinderhöhe parallel zur Rotationsachse) gefertigt. Ein erfindungsgemäßer Rotationskörper hat beispielsweise eine Länge von 1300 mm, einen Außendurchmesser von 350 mm und eine Wanddicke des Zylindermantels von 20 mm. Das Gewicht eines solchen Rotationskörpers beträgt ungefähr 40 kg. Durch die geringe Wanddicke der Zylindermantelfläche des Rotationskörpers kann dieser in einem Stück als Wickelbauteil gefertigt werden, was bei dickeren Mantelflächen nicht möglich ist. Somit wird die Herstellung des Rotationskörpers vereinfacht und beschleunigt. Damit ein entsprechend langer Rotationskörper mit geringer Wanddicke rotieren kann, muss dessen Biegesteifigkeit deutlich gegenüber Rotationskörpern bekannter Bauart erhöht werden, damit die erste Biegeeigenfrequenz des langen Rotorrohres hinreichend weit über der der Betriebsdrehzahl des Rotors entsprechenden Umdrehungsfrequenz liegt. Dies wird mit dem erfindungsgemäßen Schichtaufbau des Faserverbundmaterials realisiert.

Ein Faserverbundmaterial besteht im Allgemeinen aus zwei Hauptkomponenten, hier aus Fasern, eingebettet in einem Matrixmaterial, das den festen Verbund zwischen den Fasern herstellt. Das Faserverbundmaterial kann dabei aus einem Faserbündel oder aus mehreren Fasern des gleichen Fasertyps oder mit unterschiedlichen Fasertypen gewickelt werden, wobei die Faser(n) in Kontakt zueinander eng nebeneinander gewickelt werden. Dadurch entsteht eine Faserschicht, auf die die Fasern in weiteren Faserschichten gewickelt werden, bis das Faserverbundmaterial die gewünschte Dicke besitzt. Ein Paket aus ein oder mehreren Faserschichten aus einem Faserverbundmaterial wird hier als Faserlage (Helixlage oder Umfangslage) bezeichnet. Dabei kann das Faserverbundmaterial je nach Anwendung eine unterschiedliche Anzahl an Faserlagen (Helixlagen plus Umfangslagen) umfassen, wobei sich unterschiedliche Faserlagen beispielsweise durch den jeweiligen Faserwinkel unterscheiden. Als Faserwinkel (Helix-Faserwinkel, Umfangs-Faserwinkel) wird hierbei der mittlere (gemittelte) Winkel zwischen Rotationsachse und der Ausrichtung der gewickelten Faser (Faserrichtung) in der Faserlage bezeichnet, wobei beim Faserwinkel nicht zwischen dem Wickelsinn (vorwärts / rückwärts bzw. rechts / links) unterschieden wird. Somit haben beispielsweise die sich in Helixlagen kreuzenden Fasern den gleichen Faserwinkel (gleicher Betrag des Wertes). Durch den Verbund erhält das Faserverbundmaterial höherwertige Eigenschaften, wie beispielsweise eine hohe Festigkeit als jede der beiden einzelnen beteiligten Komponenten liefern könnte. Als Fasern können Kohlenstofffasern, insbesondere besonders belastbare oder besonders steife Kohlenstofffasern, verwendet werden. Als Matrixmaterialien können beispielsweise Duromere oder Thermoplaste verwendet werden. Die Materialeigenschaften der Fasern und Matrixmaterialien sind dem Fachmann bekannt, so dass der Fachmann eine geeignete Kombination aus Fasern und Matrixmaterialien zur Herstellung des Faserverbundmaterials für die jeweilige Anwendung auswählen kann. Hierbei können die Faserlage(n) im Faserverbundbereich eine einzelne Faser oder mehrere gleiche oder unterschiedliche Fasern umfassen. Der Rotationskörper kann dabei vollständig oder nur in einem Faserverbundbereich aus Faserverbundmaterial hergestellt sein. Die Faserverbundmaterialien in den Helixlagen und die Faserverbundmaterialien in den Umfangslagen können die gleichen Fasern und das gleiche Matrixmaterial umfassen oder sich in der Wahl der jeweiligen Fasern und/oder der jeweiligen Matrixmaterialien unterscheiden. Der Begriff "Faserverbundbereich" bezeichnet einen Bereich oder Volumen des Rotationskörpers, das zumindest im Wesentlichen nur aus Faserverbundmaterialien hergestellt ist. In einer Ausführungsform ist der Rotationskörper vollständig aus Faserverbundmaterial hergestellt. Ein solcher Rotationskörper weist die höchsten Festigkeiten bei geringem Gewicht auf. Der Schichtaufbau des Faserverbundmaterials bezeichnet die Abfolge von übereinander gewickelten Helix- und Umfangslagen in radialer Richtung gesehen. Die radiale Richtung ist dabei die Richtung senkrecht zur Rotationsachse von der Innenseite zur Außenseite des Zylindermantels. Die abwechselnde Folge an Helix- und Umfangslagen bewirkt zusätzlich, dass alle Helixlagen durch Umfangslagen überwickelt werden, wodurch aus den Bereichen in der überwickelten Helixlage zwischen den sich innerhalb der Helixlage kreuzenden Faser überschüssiges Harz und eventuell vorhandene Luftblasen herausgepresst werden, was die Stärke des Materialverbunds des Faserverbundmaterials weiter erhöht. Die äußere Lage (zur Außenseite) des Zylindermantels wird dann durch eine Umfangslage gebildet.

Durch die Fasereigenschaften und die Faserwinkel verleihen die Helixlagen dem Rotationskörper eine hohe Biegesteifigkeit. Selbst bei einer kleinen Anzahl an Helixlagen wird eine für die Anwendung in Schwungradenergiespeichern ausreichende Biegefestigkeit erreicht. Für die Helixlagen mit ihren Faserwinkeln von weniger als 35 Grad werden beispielsweise hochsteife Kohlenstofffasern, oft Pechfasern, verwendet. Für Umfangslagen mit Faserwinkeln größer 80 Grad zur Rotationsachse werden beispielsweise feste oder hochfeste Kohlenstofffasern verwendet. Die Umfangslagen verleihen dem Rotationskörper eine Festigkeit in radialer Richtung, sorgen für eine möglichst geringe Ausdehnung des Rotationskörpers bei der Rotation und dienen als Abstützung der Helixlagen, die sich nicht von alleine tragen würden. Durch die Rotationsbelastung entstehen innerhalb der Umfangslagen radiale Zugspannungen. Sie wirken quer zur Faserrichtung und können somit das Material leicht schädigen. Die Helixlagen würden sich ohne Unterstützung von Umfangslagen unter der gegebenen Rotationsbelastung deutlich stärker verformen. Sie stützen sich daher an der nächsten außenliegenden Umfangslage ab und erzeugen damit dort eine radiale Druckspannung. Damit können sie bei geeigneter Auslegung die radialen Zugspannungen vollständig oder zumindest teilweise kompensieren. Die abwechselnde Anordnung von Helix- und Umfangslagen ist für diese Kompensation der Zugspannungen besonders vorteilhaft. Das Abstützen führt aber auch zu einer Erhöhung der tangentialen Spannungen in den Umfangslagen. Deshalb ist es vorteilhaft, nur genau so viele Helixlagen zu verwenden, wie für die erforderliche Biegesteifigkeit unbedingt notwendig sind.

Innerhalb der Helixlagen und zwischen Helix- und Umfangslagen entstehen bei den Rotationsbelastungen auch Schubspannungen die das Material beschädigen können. Diese Zugspannungen sind bei außenliegenden Helixlagen größer, weshalb weiter innenliegende Helixlagen für diesen Aspekt vorteilhaft sind. Andererseits tragen weiter außenliegende Helixlagen mehr zur gewünschten Biegesteifigkeitserhöhung bei. Somit wäre eine weiter außenliegende Helixlage vorteilhaft. Die Konstruktion eines geeigneten Schichtaufbaus muss alle diese teilweise widersprüchlichen Gesichtspunkte berücksichtigen. Geeignete und optimale Schichtaufbauten können zum Beispiel mit Hilfe von Finite Elemente ermöglicht den deutlich geringeren Verbrauch an Faserverbundmaterial und damit kann der erfindungsgemäße Rotationskörper deutlich billiger gebaut werden als konventionelle Bauformen, wobei die Wirtschaftlichkeit des erfindungsgemäßen Rotationskörper bei der Energiespeicherung über seine Baulänge erreicht wird. Mit dem erfindungsgemäßen Rotationskörper wird ein geeignetes kostengünstiges und zuverlässiges Bauteil für Rotoren für Schwungrad-Energiespeicher zur Verfügung gestellt, mit dem der Schwungrad-Energiespeicher einen großen Energieinhalt besitzen kann und dessen Lagerung und Betrieb dennoch leicht, kostengünstig und zuverlässig durchgeführt werden kann.

Dabei betragen die Helix-Faserwinkel zwischen 15 Grad und 30 Grad. Bei Faserwinkeln in diesem Intervall verleihen die Helixlagen dem Rotationskörper die höchsten Biegesteifigkeiten. Dabei unterscheiden sich dabei die Helix-Faserwinkel unterschiedlicher Helixlagen.

Dabei nehmen die Helix-Faserwinkel in radialer Richtung mit wachsendem Abstand zur Rotationsachse von Helixlage zu Helixlage zu. Dadurch wird die Kompensation der radialen Zugspannungen maximiert. Bevorzugt nehmen dafür die Helix-Faserwinkel dabei in radialer Richtung von 23 Grad für die innerste Helixlage auf 30 Grad für die äußerste Helixlage zu.

In einer Ausführungsform sind alle Helixlagen in radialer Richtung gesehen im inneren Drittel des Zylindermantels angeordnet. Dieser Aufbau (Schichtaufbau) des Zylindermantels minimiert die zwischen den Helixlagen und den Umfangslagen auftretenden Schubspannungen am Übergang zwischen den unterschiedlichen Lagen, wobei die Zugspannungen durch die weiter innen liegenden Helixlagen ebenfalls günstig beeinflusst werden.

In einer Ausführungsform umfasst der Schichtaufbau des Faserverbundmaterials zur Bereitstellung eines sehr stabilen Zylindermantels mindestens fünf Helixlagen. Diese Helixlagen werden mit einer entsprechenden Anzahl an Umfangslagen überwickelt. In einer Ausführungsform beträgt eine Gesamtdicke aller Helixlagen dabei nicht mehr als 12,5% der Wanddicke des Zylindermantels. Die Helixlagen befinden sich dabei bevorzugt alle im inneren Drittel der Wandstärke bzw. Wanddicke des Zylindermantels. Dieser Aufbau (Schichtaufbau) des Zylindermantels minimiert die zwischen den Helixlagen und den Umfangslagen auftretenden Schubspannungen am Übergang zwischen den unterschiedlichen Lagen, da mehrere Helixlagen jeweils überwickelt mit einer entsprechenden Umfangslage mehrere Lagenübergänge mit entsprechend höherer Lagenvernetzung bereitstellen als beispielsweise ein Paket aus einer Helixlage umwickelt mit einer Umfangslage oder über den gesamten Radius beispielsweise gleichmäßig verteilte Helixlagen.

In einer weiteren Ausführungsform besitzen die einzelnen Helixlagen eine Helixlagendicke in radialer Richtung, die kleiner als 4% der Wanddicke des Zylindermantels ist. Beispielsweise ist die Helixlagendicke kleiner als 0,5mm. Für die Verbesserung der Biegesteifigkeit sind bereits so dünnen Helixlagen ausreichend. Dünne Helixlagen vermindern zusätzlich den Materialaufwand und verringern daher den Herstellungsaufwand. In einer bevorzugten Ausführungsform entspricht daher die Helixlagendicke lediglich der Dicke zweier kreuzweise übereinander angeordneter Helix-Faserschichten. Eine solche Helixlage ist die dünnste mögliche Faserlage im Rotationskörper.

In einer bevorzugten Ausführungsform ist der Zylindermantel vollständig aus Faserverbundmaterial hergestellt. Damit lässt sich der Rotationskörper mit einem ein fachen Wickelprozess vollständig aus einem Stück fertigen, besitzt dabei aber durch seinen erfindungsgemäßen Schichtaufbau vorteilhafte Biegesteifigkeiten und Festigkeiten sowie geringe radiale Zugspannungen im Zylindermantel. Bei einem solchen Rotationskörper erstrecken sich die Helixlagen und Umfangslage entlang der Rotationsachse im Wesentlichen über den gesamten Rotationskörper, wobei sich der Ausdruck im Wesentlichen auf etwaige schräge Schnittkanten an den Enden des Rotationskörpers beziehen, was für die Gesamtlänge des Rotationskörper und des sich darüber erstreckenden Schichtaufbaus vernachlässigbar ist.

Die Erfindung betrifft des Weiteren einen Rotor mit einem erfindungsgemäßen innen hohlen zylinderförmigen Rotationskörper. Dieser Rotor kann dabei eine oder mehrere Naben umfassen, die mit der Innenseite des Zylindermantels des Rotationskörpers zur Übertragung von Torsionsmomenten auf den Zylindermantel geeignet verbunden sind, wobei die Naben jeweils über eine Welle oder Zapfen in jeweils einem Lager geeignet gelagert sind und zumindest eine der Wellen oder Zapfen über einen Motor zumindest geeignet angetrieben werden kann.

Der Rotationskörper eines Schwungradenergiespeichers ist in der Regel über zwei oder mehr Naben mit den Lager- und Antriebselementen des SchwungradEnergiespeichers verbunden. Die Naben haben dabei einerseits eine Verbindung und Fixierung des Rotationskörpers mit den Lager- und Antriebselementen herzustellen und andererseits für die Übertragung der Torsionsmomente von einer Antriebswelle auf den Rotationskörper und umgekehrt zu sorgen. Die Naben sind dazu ebenfalls aus Faserverbundmaterial hergestellt und zeichnen sich dadurch aus, dass sie mechanisch ausreichend stark belastbar und damit zuverlässig ist, um den radialen und tangentialen Belastungen bei sehr hohen Drehzahlen von mehr als 50.000 U/min aufgrund der auf den Rotationskörper wirkenden Fliehkräfte standzuhalten, die Gewichtsbelastung durch den Rotationskörper zu tragen, die bei diesen Drehzahlen wirkenden Presskräfte an den Verbindungsstellen zwischen Rotationskörper und Nabe beziehungsweise zwischen Nabe und Zapfen standzuhalten, und dennoch für eine effektive Übertragung der Drehmomente zwischen Antriebseinheit und Rotationskörper durch eine tangentiale Formstabilität zu sorgen. Die Nabe besitzt außerdem durch ihr Material und durch ihre geometrische Form eine radiale Dehnfähigkeit, die geeignet angepasst werden kann, um der Dehnung des Rotationskörpers gerade bei sehr hohen Drehzahlen folgen zu können. Somit werden kritische Zugspannungen zwischen Rotationskörper und Nabe vermeiden, die sonst zu einer Beschädigung der Nabe oder zum Verbiegen oder Ablösen des Rotationskörpers von der Nabe bei sehr hohen Drehzahlen führen könnten. Die Nabe ermöglicht zusätzlich durch die Verwendung von CFK-Laminat ein gutmütiges Crashverhalten für den Fall eines Absturzes des Rotors im Schwungrad-Energiespeicher. Ferner kann das Gewicht der Nabe und damit des Rotors gegenüber konventionellen Naben und entsprechenden Rotoren gesenkt werden, was eine einfachere Lagerung des Rotors ermöglicht. Die Nabe kann beispielsweise einteilig aus einem Fasermaterial in Verbindung mit einem Matrixsystem hergestellt sein. Das Matrixmaterial umschließt dabei das Geflecht aus Fasern vollständig, wobei sich die Fasern in diesem Geflecht in zwei unterschiedlichen Ausrichtungen kreuzen. Das Geflecht kann dabei unterschiedlich eng hergestellt sein. Bei der Fertigung der Nabe ist ein hoher Faservolumenanteil erwünscht.

Ein erfindungsgemäßer Rotor hat beispielsweise eine Länge von 1300 mm, einen Außendurchmesser von 350 mm und eine Wanddicke (des Zylindermantels) von 20 mm. Das Gewicht eines solchen Rotors beträgt ca. 40 kg. Die Naben haben dabei einen auf den Innendurchmesser des Rotationskörpers angepassten Außendurchmesser.

In einer Ausführungsform sind die Naben innerhalb des zylinderförmigen Rotationskörpers so angeordnet, dass die Naben nicht aus den offenen Zylinderdeckelflächen herausragen. Somit ist die Lagerung innerhalb des Zylindermantels angeordnet und wird im Falle eines Absturzes des Rotors nicht Geschwindigkeiten rotierte, als außenliegendes Material. Der erfindungsgemäße Schwungradenergiespeicher vermeidet einen hohen Materialaufwand durch den dünnwandigen Aufbau, wobei dieser Rotor effizient betrieben werden kann, da er zur Bereitstellung einer benötigten Rotationsmasse sehr lang gebaut werden kann.

Die Erfindung betrifft des Weiteren ein Verfahren zur Herstellung eines erfindungsgemäßen innen hohler zylinderförmigen Rotationskörpers 1 mit einem Zylindermantel, einer Zylinderachse als Rotationsachse, offenen Zylinderflächen und einer Länge parallel zur Rotationsachse von mehr als dem zweifachen des vorgesehenen Außendurchmesser des Rotationskörpers, umfassend die Schritte:
(a) Bereitstellen eines geeigneten entsprechenden Wickelkörpers zur Herstellung des Rotationskörpers, wobei der Zylindermantel zumindest zum Teil aus Faserverbundmaterial gewickelt wird;
(b) Umwickeln des Wickelkörpers abwechselnd mit Helixlagen aus Fasern mit einer Faserrichtung entlang eines Helix-Faserwinkels zwischen 15 Grad und 30 Grad zur Rotationsachse und Umfangslagen aus Fasern mit einer Faserrichtung entlang eines Umfangs-Faserwinkels größer 80 Grad zur Rotationsachse mittels eines geeigneten Wickelverfahrens bis die gewünschte Dicke des Zylindermantels, die kleiner als 15% des Außendurchmessers des Zylindermantels ist, erreicht ist, wobei sich die Helix-Faserwinkel (FWH, FWH1, FHW2, FHW3) unterschiedlicher Helixlagen (H, H1, H2, H3) unterscheiden und in radialer Richtung (RR) mit wachsendem Abstand zur Rotationsachse (R) von Helixlage (H, H1, H2, H3) zu Helixlage (H, H1, H2, H3) zunehmen; und
(c) Vernetzen des Faserverbundmaterials des Rotationskörpers und Entfernen des Wickelkörpers vom gewickelten und vernetzten Rotationskörper.

Hierbei kann als erstes eine Helixlage auf den Wickelkörper, danach eine Umfangslage auf diese Helixlage, danach wieder eine weitere Helixlage auf diese Umfangslage, danach eine weitere Umfangslage auf diese weitere Helixlage und so weiter abwechselnd bis zum Erreichen der gewünschten Dicke des Zylindermantels gewickelt werden.

Das Vernetzen des zweiten Faserverbundmaterials bezeichnet einerseits ein Vernetzen innerhalb des zweiten Faserverbundmaterials als auch ein Vernetzen mit den obersten Lagen des Faserverbundmaterials des ersten Körpers. Der Wickelkörper bezeichnet hierbei die formvorgebende Unterlage für den darauf gewickelten Rotationskörper. Die Form des Wickelkörpers bestimmt damit die spätere Form der Innenseite des darauf gewickelten Rotationskörpers. Die Vernetzung der Fasern und Faserlagen erfolgt beispielsweise bei reaktiven Systemen wie Duomeren durch Aushärtung und bei thermoplastischen Systemen durch Abkühlung. Durch dieses Verfahren lassen sich Rotationskörper für Rotoren mit hoher spezifischer Energiespeicherfähigkeit herstellen, die nur geringe radiale Zugspannungen aufweisen, in einem Stück zu fertigen sind und für die preiswerte hochsteife Fasern auf Pechbasis verwendet werden können.

In einer Ausführungsform des Verfahrens umfasst der Schritte des Umwickelns des Wickelkörpers abwechselnd mit Helixlagen und Umfangslagen ein oder mehrere zusätzliche Vor-Vernetzungsschritte nach Umwickeln mit einer Helixlage und/oder einer Umfangslage, vorzugsweise nach jedem Umwickeln mit einer Helixlage und/oder einer Umfangslage.

### Kurze Beschreibung der Abbildungen

Diese und andere Aspekte der Erfindung werden im Detail in den Abbildungen wie folgt gezeigt.
- Fig.1:: eine Ausführungsform des erfindungsgemäßen Rotationskörpers (a) in Draufsicht auf eine offene Zylinderfläche und (b) im seitlichen Schnitt entlang der Rotationsachse;
- Fg.2:: eine Ausführungsform des Schichtaufbaus der Zylindermantelfläche mit in radialer Richtung abwechselnd übereinander angeordneten Helix- und Umfangslagen;
- Fig.3:: eine Ausführungsform von Faserverläufen in (a) Umfangslagen und (b) Helixlagen in Draufsicht senkrecht zur Rotationsachse;
- Fig.4:: eine Ausführungsform des erfindungsgemäßen Rotors im seitlichen Schnitt;
- Fig.5:: eine schematische Darstellung einer Ausführungsform des erfindungsgemäßen Schwungradenergiespeichers;
- Fig.6:: eine Ausführungsform des erfindungsgemäßen Verfahrens zur Herstellung des erfindungsgemäßen Rotationskörpers.

### Detaillierte Beschreibung der Ausführungsbeispiele

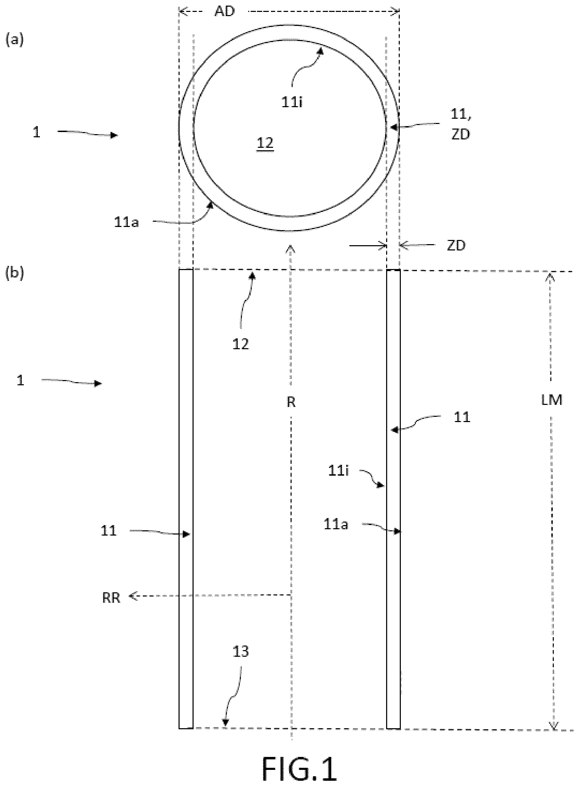

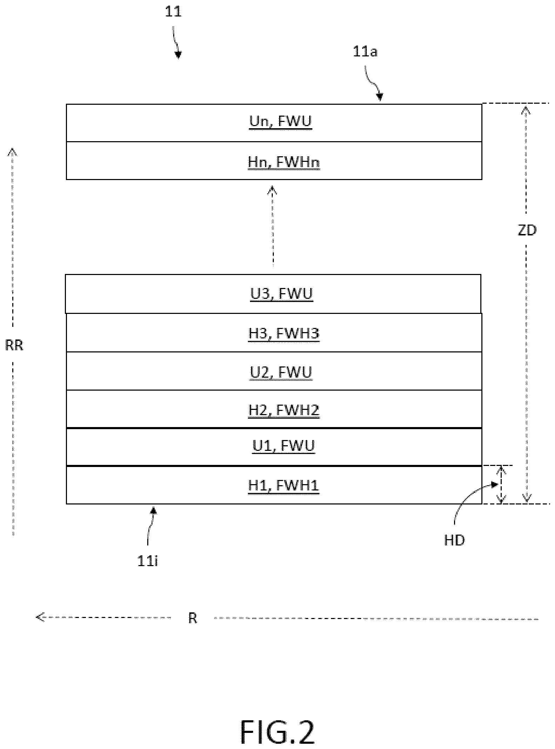

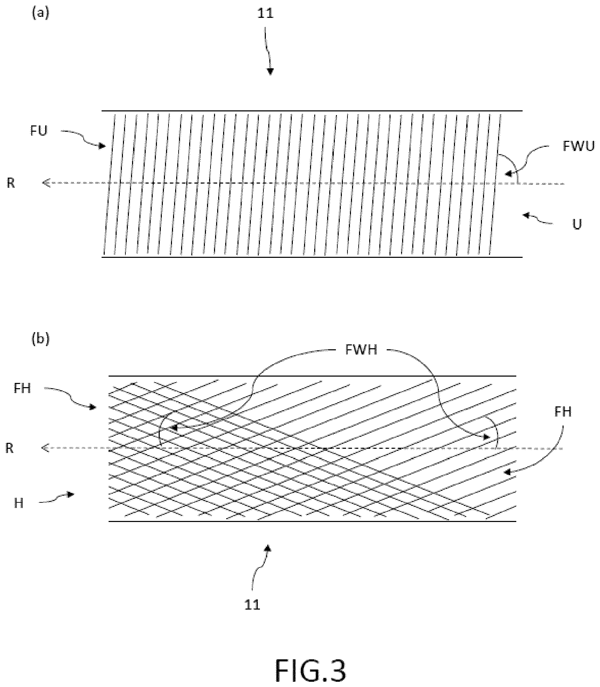

Fig.1 zeigt eine Ausführungsform des erfindungsgemäßen Rotationskörpers 1 (a) in Draufsicht auf eine offene Zylinderfläche 11 und (b) im seitlichen Schnitt entlang der Rotationsachse R. Der Rotationskörper 1 umfasst einen in dieser Ausführungsform vollständig aus Faserverbundmaterial gewickelten Zylindermantel 11 mit einer Zylinderachse als Rotationsachse R und offenen Zylinderdeckelflächen 12, 13 (gestrichelt dargestellt). Der Zylindermantel 11 umfasst eine Innenseite 11i zugewandt zur Rotationsachse R und eine entgegengesetzt ausgerichtete Außenseite 11a und hat eine Länge LM parallel zur Rotationsachse R von mehr als dem zweifachen des Außendurchmesser AD des Rotationskörpers 1. Die Wanddicke ZD (oder auch Wandstärke) der Zylindermantels 11 ist dabei kleiner als 12,5% des Außendurchmessers AD. Das Faserverbundmaterial des Zylindermantels 11 besitzt zudem einen Schichtaufbau in radialer Richtung RR, der mehrere sich entlang der Rotationsachse R erstreckende Helixlagen H aus Fasern FH mit einer Faserrichtung entlang eines Helix-Faserwinkels FWH kleiner 35 Grad zur Rotationsachse R und mehrere tangential dazu über die Länge LM des Zylindermantels 11 angeordnete Umfangslagen U aus Fasern FU mit einer Faserrichtung entlang eines Umfangs-Faserwinkels FWU größer 80 Grad zur Rotationsachse R umfasst, wobei die Helixlagen H und die Umfangslagen U abwechselnd übereinander angeordnet sind (siehe dazu auch Fig.2 und 3). Der hier gezeigte Rotationskörper 1 hat beispielsweise eine Länge LM von 1300 mm, einen Außendurchmesser AD von 350 mm und eine Wanddicke ZD des Zylindermantels 11 von 20 mm. Durch die geringe Wanddicke ZD des Zylindermantels 11 des Rotationskörpers 1 kann dieser in einem Stück als Wickelbauteil gefertigt werden, was bei dickeren Mantelflächen nicht möglich ist. Somit wird die Herstellung des Rotationskörpers 1 vereinfacht und beschleunigt.

Fg.2 zeigt eine Ausführungsform des Schichtaufbaus der Zylindermantelfläche 11 mit in radialer Richtung RR abwechselnd übereinander angeordneten Helix- und Umfangslagen H1, U1, H2, U2, H3, U3, ... , Hn, Un. Hier ist der Zylindermantel 11 vollständig aus Faserverbundmaterial hergestellt. Die hier gezeigte Lagenfolge H1 bis Un ist schematisch dargestellt, wobei die Lagendicken hier nicht maßstabsgetreu dargestellt sind. Einzelne Lagen (Helix- und/oder Umfangslagen) können unterschiedliche Lagendicke besitzen, insbesondere können die Umfangslagen U1, U2, U3, ... , Un größere Lagendicken als die Helixlagen H1, H2, H3, ... , Hn besitzen. In den einzelnen Helixlagen H1, ... Hn betragen die Helix-Faserwinkel FWH1, ... , FWHn zwischen 15 Grad und 30 Grad. Hierbei unterscheiden sich die Helix-Faserwinkel FWH1, FHW2, FHW3, ... , FWHn in den unterschiedlichen Helixlagen H1, H2, H3, ... , Hn. Dabei nehmen die Helix-Faserwinkel FWH1, FWH2, FWH3, ... , FWHn in radialer Richtung RR mit wachsendem Abstand zur Rotationsachse R von den jeweiligen Helixlagen H1, H2, H3, ... , Hn von Helixlage zu Helixlage zu. In einer bevorzugten Ausführungsform nehmen die Helix-Faserwinkel FWH1, FWH2, FWH3, ... , FWHn dabei in radialer Richtung RR von 23 Grad auf 30 Grad zu. Vorzugsweise sind dabei alle Helixlagen H1, H2, H3, ... , Hn in radialer Richtung RR gesehen im inneren Drittel des Zylindermantels 11 angeordnet. Somit würde die oberste Umfangslage Un eine Lagendicke besitzen, die 66% oder mehr der Wanddicke ZD ausmacht. In einer Ausführungsform umfasst der gezeigte Schichtaufbau mindestens fünf Helixlagen H1 ... Hn. Vorzugsweise beträgt dabei die Summe aller Helixlagendicken (Gesamtdicke aller Helixlagen) nicht mehr als 12,5% der Wanddicke ZD des Zylindermantels 11. Vorzugsweise besitzen die einzelnen Helixlagen H1 ... Hn eine Helixlagendicke HD in radialer Richtung RR, die kleiner als 4% der Wanddicke des Zylindermantels ist, vorzugsweise ist die Helixlagendicke HD kleiner als 0,5mm. Die abwechselnde Folge an Helix- und Umfangslagen H1, U1, H2, U2, H3, U3, ... , Hn, Un bewirkt zusätzlich, dass alle Helixlagen H1, H2, H3, ... , Hn durch Umfangslagen U1, U2, U3, ... , Un überwickelt werden, wodurch aus den Bereichen in der jeweils überwickelten Helixlage H1 - Hn zwischen den sich innerhalb der Helixlage kreuzenden Faser überschüssiges Harz und eventuell vorhandene Luftblasen herausgepresst werden, was die Stärke des Materialverbunds des Faserverbundmaterials weiter erhöht. Die äußere Lage (zur Außenseite 11a) des Zylindermantels 11 wird dann durch eine Umfangslage Un gebildet.

Fig.3 zeigt eine Ausführungsform von prinzipiellen Faserverläufen in (a) Umfangslagen U und (b) in Helixlagen H in Draufsicht senkrecht zur Rotationsachse R. Ein Paket aus ein oder mehreren Faserschichten aus einem Faserverbundmaterial wird hier als Faserlage (Helixlage H oder Umfangslage U) bezeichnet. Hier dargestellt ist jeweils die oberste Schicht aus Fasern FU, FH der jeweiligen Lage, wobei die oberste Faserschicht der Helixlage H zur Darstellung der sich kreuzenden Helixfasern FH als unvollständige Faserschicht dargestellt ist. Als Helix-Faserwinkel FWH und Umfangs-Faserwinkel FWU werden die jeweiligen mittleren (gemittelte) Faserwinkel FWH, FWU zwischen Rotationsachse R und der Ausrichtung der gewickelten Faser (Faserrichtung) in der Faserlage bezeichnet, wobei beim Faserwinkel FWH, FWU nicht zwischen dem Wickelsinn (vorwärts / rückwärts bzw. rechts / links) unterschieden wird. Somit haben beispielsweise die sich in der hier dargestellten Helixlage H kreuzenden Fasern den gleichen Faserwinkel FWH (gleicher Betrag des Wertes). Der Helix-Faserwinkel FWH der erfindungsgemäßen Rotationskörpers 11 ist dabei kleiner 35 Grad, während der größer 80 Grad ist. Je nach Ausführungsform kann der Helix-Faserwinkel FWH zwischen 15 Grad und 30 Grad betragen, auch können die Helix-Faserwinkel FWH in unterschiedlichen Helixlagen H unterscheiden. Hierbei können die Helix-Faserwinkel FWH in radialer Richtung RR mit wachsendem Abstand zur Rotationsachse R von Helixlage zu Helixlage zunehmen. Dabei können die Helix-Faserwinkel FWH in radialer Richtung RR beispielsweise von 23 Grad auf 30 Grad zunehmen. Die einzelne Helixlagendicke HD entspricht dabei mindestens der Dicke zweier kreuzweise übereinander angeordneter Helix-Faserschichten, siehe Fig.3(b).

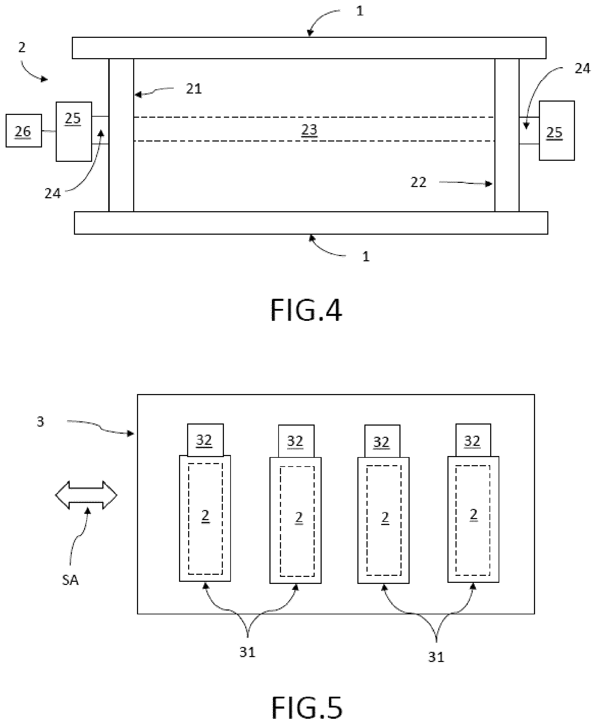

Fig.4 zeigt eine Ausführungsform des erfindungsgemäßen Rotors 2 im seitlichen Schnitt mit einem erfindungsgemäßen innen hohlen zylinderförmigen Rotationskörper 1. Dieser Rotor 2 umfasst hier zwei Naben 21, 22, die mit der Innenseite 11i des Zylindermantels 11 des Rotationskörpers 1 zur Übertragung von Torsionsmomenten auf den Zylindermantel 11 geeignet verbunden sind, wobei die Naben 21, 22 jeweils über eine Welle 23 (hier gestrichelt dargestellt) oder Zapfen 24 in jeweils einem Lager 25 geeignet gelagert sind und zumindest einen der Zapfen 24 oder die Welle 23 über einen Motor 26 zumindest geeignet angetrieben werden kann. Die Naben 21, 22 können ebenfalls aus Faserverbundmaterial hergestellt werden und zeichnen sich dadurch aus, dass sie mechanisch ausreichend stark belastbar und damit zuverlässig ist, um den radialen und tangentialen Belastungen bei sehr hohen Drehzahlen von mehr als 50.000 U/min aufgrund der auf den Rotationskörper 1 wirkenden Fliehkräfte standzuhalten, die Gewichtsbelastung durch den Rotationskörper 1 zu tragen, die bei diesen Drehzahlen wirkenden Presskräfte an den Verbindungsstellen zwischen Rotationskörper 1 und Naben 21, 22 beziehungsweise zwischen Naben 21, 22 und Zapfen 24 (beziehungsweise Welle 23) standzuhalten, und dennoch für eine effektive Übertragung der Drehmomente zwischen Antriebseinheit (hier Motor 26) und Rotationskörper 1 durch eine tangentiale Formstabilität zu sorgen. Die Naben 21, 22 besitzt außerdem durch ihr Material und durch ihre geometrische Form eine radiale Dehnfähigkeit, die geeignet angepasst werden kann, um der Dehnung des Rotationskörpers 1 gerade bei sehr hohen Drehzahlen folgen zu können. Somit werden kritische Zugspannungen zwischen Rotationskörper 1 und Naben 21, 22 vermeiden, die sonst zu einer Beschädigung der Naben 21, 22 oder zum Verbiegen oder Ablösen des Rotationskörpers 1 von der Nabe 21, 22 bei sehr hohen Drehzahlen führen könnten. Die Naben 21, 22 ermöglichen durch die Verwendung von CFK-Laminat ein gutmütiges Crashverhalten für den Fall eines Absturzes des Rotors 2 im Schwungrad-Energiespeicher. Ferner kann das Gewicht der Naben 21, 22 und damit des Rotors 1 gegenüber konventionellen Naben und entsprechenden Rotoren gesenkt werden, was eine einfachere Lagerung des Rotors 1 ermöglicht. Die Naben 21, 22 können beispielsweise einteilig aus einem Fasermaterial in Verbindung mit einem Matrixsystem hergestellt sein. Das Matrixmaterial umschließt dabei das Geflecht aus Fasern vollständig, wobei sich die Fasern in diesem Geflecht in zwei unterschiedlichen Ausrichtungen kreuzen. Das Geflecht kann dabei unterschiedlich eng hergestellt sein. Bei der Fertigung der Naben 21, 22 ist ein hoher Faservolumenanteil erwünscht. Ein erfindungsgemäßer Rotor hat beispielsweise eine Länge von 1300 mm, einen Außendurchmesser von 350 mm und eine Wanddicke (des Zylindermantels) von 20 mm. Das Gewicht eines solchen Rotors 1 beträgt ca. 40 kg. Die Naben 21, 22 haben dabei einen auf den Innendurchmesser des Rotationskörpers 1 angepassten Außendurchmesser. In einer Ausführungsform sind die Naben 21, 22 innerhalb des zylinderförmigen Rotationskörpers 1 so angeordnet, dass die Naben 21, 22 nicht aus den offenen Zylinderdeckelflächen 12, 13 herausragen. Somit sind die Lager 24 innerhalb des Zylindermantels 11 angeordnet und wird im Falle eines Absturzes des Rotors 1 nicht direkt getroffen.

Fig.5 zeigt eine schematische Darstellung einer Ausführungsform des erfindungsgemäßen Schwungradenergiespeichers 3 mit mehreren (in dieser Ausführungsform vier) jeweils von einem Maschinegehäuse 31 umschlossenen erfindungsgemäßen Rotoren 2 (siehe beispielsweise Fig.4), wobei der Rotor 2 über eine Motor-Generator-Einheit 32 (anstelle der Motoreinheit 26 aus Fig.4) des Schwungradenergiespeichers 3 zum Speichern SA von elektrischer Energie beschleunigt und zur Abgabe SA von elektrischer Energie abgebremst werden kann

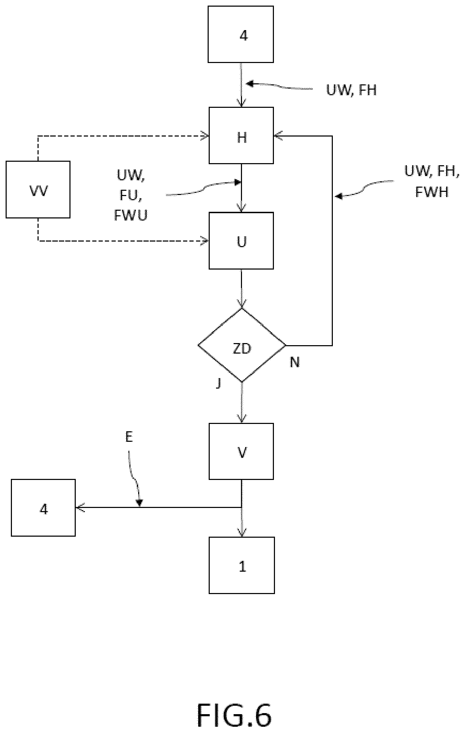

Fig.6 zeigt eine Ausführungsform des erfindungsgemäßen Verfahrens zur Herstellung des erfindungsgemäßen Rotationskörpers 1 mit einem Zylindermantel 11, einer Zylinderachse als Rotationsachse R, offenen Zylinderflächen 12, 13 und einer Länge LW parallel zur Rotationsachse R von mehr als dem zweifachen des vorgesehenen Außendurchmesser AD des Rotationskörpers 1 (wie in Figur 1 dargestellt), das die Schritte des Bereitstellens eines geeigneten entsprechenden Wickelkörpers 4 zur Herstellung des Rotationskörpers 1 zumindest zum Teil aus Faserverbundmaterial; des Umwickelns UW des Wickelkörpers 4 abwechselnd mit Helixlagen H aus Fasern FH mit einer Faserrichtung entlang eines Helix-Faserwinkels FWH kleiner 35 Grad zur Rotationsachse R und Umfangslagen U aus Fasern FU mit einer Faserrichtung entlang eines Umfangs-Faserwinkels FWU größer 80 Grad zur Rotationsachse R mittels eines geeigneten Wickelverfahrens bis die gewünschte Dicke ZD des Zylindermantels 11, die kleiner als 12,5% des Außendurchmessers AD des Zylindermantels 11 ist, erreicht ist; des Vernetzens V des Faserverbundmaterials des Rotationskörpers 11 und des Entfernens E des Wickelkörpers 4 vom gewickelten und vernetzten Rotationskörper 11 umfasst. In einer Ausführungsform kann das Verfahren zusätzlich während der Umwickelung U des Wickelkörpers 4 abwechselnd mit Helixlagen H und Umfangslagen U zusätzliche Vor-Vernetzungsschritte VV nach Umwickeln U mit jeweils mit einer Helixlage H und/oder einer Umfangslage U umfassen.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### LISTE DER BEZUGSZEICHEN

- 1: Rotationskörper
- 11: Zylindermantel
- 11i: Innenseite des Zylindermantels
- 11a: Außenseite des Zylindermantels
- 12, 13: offene Zylinderdeckelflächen
- 2: Rotor
- 21, 22: Naben
- 23: Welle
- 24: Zapfen
- 25: Lager
- 26: Motoreinheit
- 3: Schwungradenergiespeicher
- 31: Maschinegehäuse
- 32: Motor-Generator-Einheit
- 4: Wickelkörper

- AD: Außendurchmesser des Zylindermantels
- E: Entfernen des Wickelkörpers
- FH: Fasern in der Helixlage
- FU: Fasern in der Umfangslage
- FS1,2: Faserschichten in einer Helix- oder Umfangslage
- FWH: Faserwinkel der Fasern in der Helixlage (Helix-Faserwinkel)
- FWH1: erster Helix-Faserwinkel der ersten Helixlage
- FWH2: zweiter Helix-Faserwinkel der zweiten Helixlage
- FWH3: dritter Helix-Faserwinkel der dritten Helixlage
- FWHn: n-ter Helix-Faserwinkel der n-ten Helixlage
- FWU: Faserwinkel der Fasern in der Umfangslage (Umfangs-Faserwinkel)
- H: Helixlagen
- H1: erste Helixlage
- H2: zweite Helixlage
- H3: dritte Helixlagen
- Hn: n-te Helixlage
- HD: Dicke der Helixlagen
- LM: Länge des Zylindermantels parallel zur Rotationsachse (Zylinderachse)
- LW: Länge des Wickelkörpers
- R: Rotationsachse
- RR: radiale Richtung im Rotationskörper (senkrecht zur Rotationsachse)
- SA: Speichern oder Abgabe von Energie
- U: Umfangslagen
- U1: erste Umfangslage
- U2: zweite Umfangslage
- U3: dritte Umfangslage
- Un: n-te Umfangslage
- UW: Umwickeln des Wickelkörpers beziehungsweise der darauf vorhandenen Helix- oder Umfangslage
- V: Vernetzen des Faserverbundmaterials
- VV: Vor-Vernetzungsschritt nach Herstellung einer jeden Helix- und Umfangslage
- ZD: Wanddicke (Wandstärke) des Zylindermantels (senkrecht zur Rotationsachse)

## Patentansprüche

1. Ein innen hohler zylinderförmiger Rotationskörper (1) mit einem zumindest zum Teil aus Faserverbundmaterial gewickelten Zylindermantel (11), einer Zylinderachse als Rotationsachse (R) und offenen Zylinderdeckelflächen (12, 13), wobei der Zylindermantel (11) mit einer Innenseite (11i) zugewandt zur Rotationsachse (R) und einer entgegengesetzt ausgerichteten Außenseite (11a) eine Länge (LM) parallel zur Rotationsachse (R) von mehr als dem zweifachen des Außendurchmesser (AD) des Rotationskörpers (1) besitzt und eine Wanddicke (ZD) aufweist, die kleiner als 15% des Außendurchmessers (AD) ist, wobei das Faserverbundmaterial des Zylindermantels (11) einen Schichtaufbau in radialer Richtung (RR) besitzt, der mehrere sich entlang der Rotationsachse (R) erstreckende Helixlagen (H) aus Fasern (FH) mit einer Faserrichtung entlang eines Helix-Faserwinkels (FWH) kleiner 35 Grad zur Rotationsachse (R) und mehrere tangential dazu über die Länge (LM) des Zylindermantels (11) angeordnete Umfangslagen (U) aus Fasern (FU) mit einer Faserrichtung entlang eines Umfangs-Faserwinkels (FWU) größer 80 Grad zur Rotationsachse (R) umfasst, wobei die Helixlagen (H) und die Umfangslagen (U) abwechselnd übereinander angeordnet sind, wobei die Helix-Faserwinkel (FWH) zwischen 15 Grad und 30 Grad betragen, sich die Helix-Faserwinkel (FWH, FWH1, FHW2, FHW3) unterschiedlicher Helixlagen (H, H1, H2, H3) unterscheiden und in radialer Richtung (RR) mit wachsendem Abstand zur Rotationsachse (R) von Helixlage (H, H1, H2, H3) zu Helixlage (H, H1, H2, H3) zunehmen.

2. Der Rotationskörper (1) nach Anspruch 1,
**dadurch gekennzeichnet,**
**dass** die Helix-Faserwinkel (FWH, FWH1, FWH2, FWH3) dabei in radialer Richtung (RR) von 23 Grad auf 30 Grad zunehmen.

3. Der Rotationskörper (1) nach einem der voranstehenden Ansprüche,
**dadurch gekennzeichnet,**
**dass** alle Helixlagen (H) in radialer Richtung (RR) gesehen im inneren Drittel des Zylindermantels (11) angeordnet sind.

4. Der Rotationskörper (1) nach einem der voranstehenden Ansprüche,
**dadurch gekennzeichnet,**
**dass** der Schichtaufbau des Faserverbundmaterials des Zylindermantels (11) mindestens fünf Helixlagen (H) umfasst.

5. Der Rotationskörper (1) nach Anspruch 4,
**dadurch gekennzeichnet,**
**dass** eine Gesamtdicke aller Helixlagen nicht mehr als 12,5% der Wanddicke des Zylindermantels beträgt.

6. Der Rotationskörper (1) nach einem der voranstehenden Ansprüche,
**dadurch gekennzeichnet,**
**dass** die einzelnen Helixlagen (H) eine Helixlagendicke (HD) in radialer Richtung (RR) besitzen, die kleiner als 4% der Wanddicke des Zylindermantels ist, vorzugsweise ist die Helixlagendicke kleiner als 0,5mm.

7. Der Rotationskörper (1) nach Anspruch 6,
**dadurch gekennzeichnet,**
**dass** die Helixlagendicke (HD) lediglich einer Dicke zweier kreuzweise übereinander angeordneter Helix-Faserschichten (FS1, FS2) entspricht.

8. Der Rotationskörper (1) nach einem der voranstehenden Ansprüche,
**dadurch gekennzeichnet,**
**dass** der Zylindermantel (11) vollständig aus Faserverbundmaterial hergestellt ist.

9. Ein Rotor (2) umfassend einen innen hohlen zylinderförmigen Rotationskörper (1) nach Anspruch 1.

10. Ein Schwungradenergiespeicher (3) mit ein oder mehreren jeweils von einem Maschinegehäuse (31) umschlossenen Rotoren (2) nach Anspruch 9, wobei der Rotor (2) über eine Motor-Generator-Einheit (32) des Schwungradenergiespeichers (3) zum Speichern von elektrischer Energie beschleunigt und zur Abgabe von elektrischer Energie abgebremst werden kann.

11. Ein Verfahren zur Herstellung eines innen hohlen zylinderförmigen Rotationskörpers (1) nach Anspruch 1 mit einem Zylindermantel (11), einer Zylinderachse als Rotationsachse (R), offenen Zylinderflächen (12, 13) und einer Länge (LW) parallel zur Rotationsachse (R) von mehr als dem zweifachen des vorgesehenen Außendurchmesser (AD) des Rotationskörpers (1), umfassend die Schritte:
(a) Bereitstellen eines geeigneten entsprechenden Wickelkörpers (4) zur Herstellung des Rotationskörpers (1), wobei der Zylindermantel (11) zumindest zum Teil aus Faserverbundmaterial gewickelt wird;
(b) Umwickeln (UW) des Wickelkörpers (4) abwechselnd mit Helixlagen (H) aus Fasern (FH) mit einer Faserrichtung entlang eines Helix-Faserwinkels (FWH) zwischen 15 Grad und 30 Grad zur Rotationsachse (R) und Umfangslagen (U) aus Fasern (FU) mit einer Faserrichtung entlang eines Umfangs-Faserwinkels (FWU) größer 80 Grad zur Rotationsachse (R) mittels eines geeigneten Wickelverfahrens bis die gewünschte Dicke (ZD) des Zylindermantels (11), die kleiner als 15% des Außendurchmessers (AD) des Zylindermantels (11) ist, erreicht ist, wobei sich die Helix-Faserwinkel (FWH, FWH1, FHW2, FHW3) unterschiedlicher Helixlagen (H, H1, H2, H3) unterscheiden und in radialer Richtung (RR) mit wachsendem Abstand zur Rotationsachse (R) von Helixlage (H, H1, H2, H3) zu Helixlage (H, H1, H2, H3) zunehmen; und
(c) Vernetzen (V) des Faserverbundmaterials des Rotationskörpers (11) und Entfernen (E) des Wickelkörpers (4) vom gewickelten und vernetzten Rotationskörper (11).

12. Das Verfahren nach Anspruch 11, wobei der Schritte des Umwickelns (UW) des Wickelkörpers (4) abwechselnd mit Helixlagen (H) und Umfangslagen (U) zusätzliche Vor-Vernetzungsschritte (W) nach Umwickeln (UW) mit jeweils mit einer Helixlage (H) und/oder einer Umfangslage (U) umfasst.

## Claims

1. An internally hollow cylindrical rotational body (1) having a cylinder jacket (11) that is at least partially wound using a fiber-reinforced composite, also having a cylinder axis as the axis of rotation (R) and having open cylinder base surfaces (12, 13), whereby the cylinder jacket (11), with its inside (11i) facing the axis of rotation (R) and with its outside (11a) oriented in the opposite direction, has a length (LM) parallel to the axis of rotation (R) of more than twice the outer diameter (AD) of the rotational body (1), and it has a wall thickness (ZD) that is less than 15% of the outer diameter (AD), whereby the fiber-reinforced composite of the cylinder jacket (11) has a layered structure in the radial direction (RR) comprising several helical layers (H) of fibers (FH) which extend along the axis of rotation (R) and whose orientation along the helical fiber angle (FWH) is less than 35° relative to the axis of rotation (R), and comprising several circumferential layers (U) which are arranged tangentially thereto over the length (LM) of the cylinder jacket (11) and which consist of fibers (FU) whose orientation along the circumferential fiber angle (FWU) is greater than 80° relative to the axis of rotation (R), whereby the helical layers (H) and the circumferential layers (U) are arranged alternatingly one above the other, whereby the helical fiber angles (FWH) are between 15° and 30°, the helical fiber angles (FWH, FWH1, FWH2, FWH3) of the various helical layers (H, H1, H2, H3) differ, and they increase in the radial direction (RR) from one helical layer (H, H1, H2, H3) to the next helical layer (H, H1, H2, H3) as the distance from the axis of rotation (R) increases.

2. The rotational body (1) according to claim 1,
**characterized in that**
the helical fiber angles (FWH, FWH1, FWH2, FWH3) increase in the radial direction (RR) from 23° to 30°.

3. The rotational body (1) according to one of the preceding claims,
**characterized in that**
and all of the helical layers (H) are arranged in the inner one-third of the cylinder jacket (11), as seen in the radial direction (RR).

4. The rotational body (1) according to one of the preceding claims,
**characterized in that**
the layered structure of the fiber-reinforced composite of the cylinder jacket (11) comprises at least five helical layers (H).

5. The rotational body (1) according to claim 4,
**characterized in that**
the total thickness of all of the helical layers does not amount to more than 12.5% of the wall thickness of the cylinder jacket.

6. The rotational body (1) according to one of the preceding claims,
**characterized in that,**
the individual helical layers (H) have a helical layer thickness (HD) in the radial direction (RR) that is smaller than 4% of the wall thickness of the cylinder jacket, preferably, the helical layer thickness is less than 0.5 mm.

7. The rotational body (1) according to claim 6,
**characterized in that**
the helical layer thickness (HD) only amounts to the thickness of two helical fiber layers (FS1, FS2) arranged crosswise over each other.

8. The rotational body (1) according to one of the preceding claims,
**characterized in that,**
the cylinder jacket (11) is made completely of fiber-reinforced composite.

9. A rotor (2), comprising an internally hollow cylindrical rotational body (1) according to claim 1.

10. A flywheel energy storage unit (3) having one or more rotors (2) that are each surrounded by a machine housing (31) according to claim 9, whereby the rotor (2) can be accelerated by a motor-generator unit (32) of the flywheel energy storage unit (3) in order to store electric energy and it can be braked in order to release electric energy.

11. A method for the production of an internally hollow cylindrical rotational body (1) according to claim 1, having a cylinder jacket (11), a cylindrical axis as the axis of rotation (R), open cylinder base surfaces (12, 13) and a length (LW) parallel to the axis of rotation (R) amounting to more than twice the provided outer diameter (AD) of the rotational body (1), comprising the following steps:
(a) a suitable, appertaining winding mandrel (4) is provided for the manufacture of the rotational body (1), whereby the cylinder jacket (11) is wound, at least partially, using fiber-reinforced composite;
(b) helical layers (H) consisting of fibers (FH) having an orientation along a helical fiber angle (FWH) between 15° and 30° relative to the axis of rotation (R) and circumferential layers (U) consisting of fibers (FU) having an orientation along a circumferential fiber angle (FWU) greater than 80° relative to the axis of rotation (R) are wound (UW) alternatingly around the winding mandrel (4) using a suitable winding method until the desired thickness (ZD) has been achieved for the cylinder jacket (11) amounting to less than 15% of the outer diameter (AD) of the cylinder jacket (11), whereby the helical fiber angles (FWH, FWH1, FWH2, FWH3) of the various helical layers (H, H1, H2, H3) differ, and they increase in the radial direction (RR) from one helical layer (H, H1, H2, H3) to the next helical layer (H, H1, H2, H3) as the distance from the axis of rotation (R) increases; and
(c) the fiber-reinforced composite of the rotational body (1) is cross-linked (V) and the winding mandrel (4) is removed (E) from the wound and cross-linked rotational body (1).

12. The method according to claim 11, whereby the step of winding (UW) alternating helical layers (H) and circumferential layers (U) around the winding mandrel (4) comprises additional pre-cross-linking steps (W) each time after one helical layer (H) and/or one circumferential layer (U) has been wound on (UW).

## Revendications

1. Corps rotatif cylindrique (1) creux à l'intérieur, comportant une enveloppe cylindrique (11) réalisée au moins en partie en matériau composite fibreux, un axe de cylindre en tant qu'axe de rotation (R) et des faces de couvercle de cylindre ouvertes (12, 13), l'enveloppe cylindrique (11), avec une face intérieure (11i) tournée vers l'axe de rotation (R) et une face extérieure (11a) orientée dans le sens opposé, présentant une longueur (LM) parallèle à l'axe de rotation (R) de plus du double du diamètre extérieur (AD) du corps rotatif (1) et une épaisseur de paroi (ZD) inférieure à 15% du diamètre extérieur (AD), le matériau composite fibreux de l'enveloppe cylindrique (11) présentant une structure en couches dans le sens radial (RR), laquelle comprend plusieurs couches hélicoïdales (H) en fibres (FH) qui s'étendent le long de l'axe de rotation (R) avec une direction des fibres le long d'un angle de fibre d'hélice (FWH) inférieur à 35 degrés par rapport à l'axe de rotation (R) et plusieurs couches périphériques (U) en fibres (FU) agencées tangentiellement par rapport à cela sur la longueur (LM) de l'enveloppe cylindrique (11) avec une direction des fibres le long d'un angle de fibre périphérique (FWU) supérieur à 80 degrés par rapport à l'axe de rotation (R), les couches hélicoïdales (H) et les couches périphériques (U) étant superposées en alternance, les angles de fibre d'hélice (FWH) étant compris entre 15 degrés et 30 degrés, les angles de fibre d'hélice (FWH, FWH1, FHW2, FHW3) de différentes couches hélicoïdales (H, H1, H2, H3) étant différents et augmentant de couche hélicoïdale (H, H1, H2, H3) en couche hélicoïdale (H, H1, H2, H3) dans le sens radial (RR) à mesure qu'augmente la distance par rapport à l'axe de rotation (R).

2. Corps rotatif (1) selon la revendication 1, **caractérisé en ce que**, dans ce cadre, les angles de fibre d'hélice (FWH, FWH1, FWH2, FWH3) passent de 23 degrés à 30 degrés dans le sens radial (RR).

3. Corps rotatif (1) selon l'une des revendications précédentes, **caractérisé en ce que** toutes les couches hélicoïdales (H) sont, vues dans le sens radial (RR), agencées dans le tiers intérieur de l'enveloppe cylindrique (11).

4. Corps rotatif (1) selon l'une des revendications précédentes, **caractérisé en ce que** la structure en couches du matériau composite fibreux de l'enveloppe cylindrique (11) comprend au moins cinq couches hélicoïdales (H).

5. Corps rotatif (1) selon la revendication 4, **caractérisé en ce qu'**une épaisseur totale de toutes les couches hélicoïdales ne représente pas plus que 12,5% de l'épaisseur de paroi de l'enveloppe cylindrique.

6. Corps rotatif (1) selon l'une des revendications précédentes, **caractérisé en ce que** les couches hélicoïdales individuelles (H) ont, dans le sens radial (RR), une épaisseur de couche hélicoïdale (HD) qui est inférieure à 4% de l'épaisseur de paroi de l'enveloppe cylindrique, l'épaisseur de couche hélicoïdale étant préférentiellement inférieure à 0,5 mm.

7. Corps rotatif (1) selon la revendication 6, **caractérisé en ce que** l'épaisseur de couche hélicoïdale (HD) correspond uniquement à une épaisseur de deux couches de fibres hélicoïdales (FS1, FS2) superposées en croix.

8. Corps rotatif (1) selon l'une des revendications précédentes, **caractérisé en ce que** l'enveloppe cylindrique (11) est entièrement fabriquée en matériau composite fibreux.

9. Rotor (2) comprenant un corps rotatif cylindrique (1) creux à l'intérieur selon la revendication 1.

10. Système de stockage d'énergie à volant (3) comportant un ou plusieurs rotors (2) entourés chacun d'un carter de machine (31) selon la revendication 9, le rotor (2) pouvant être accéléré via une unité génératrice moteur (32) du système de stockage d'énergie à volant (3) pour stocker de l'énergie électrique et décéléré pour délivrer de l'énergie électrique.

11. Procédé de fabrication d'un corps rotatifs cylindrique (1) creux à l'intérieur selon la revendication 1 comportant une enveloppe cylindrique (11), un axe de cylindre en tant qu'axe de rotation (R), des faces de cylindre ouvertes (12, 13) et une longueur (LW) parallèle à l'axe de rotation (R) de plus du double du diamètre extérieur (AD) prévu du corps rotatif (1), comprenant les étapes suivantes :
(a) fourniture d'un corps d'enveloppement correspondant approprié (4) pour la fabrication du corps rotatifs (1), l'enveloppe cylindrique (11) étant réalisée au moins en partie en matériau composite fibreux ;
(b) enveloppement (UW) du corps d'enveloppement (4) avec, en alternance, des couches hélicoïdales (H) de fibres (FH) avec une direction des fibres le long d'un angle de fibre d'hélice (FWH) entre 15 degrés et 30 degrés par rapport à l'axe de rotation (R) et des couches périphériques (U) de fibres (FU) avec une direction des fibres le long d'un angle de fibre périphérique (FWU) supérieur à 80 degrés par rapport à l'axe de rotation (R) au moyen d'un procédé d'enveloppement approprié jusqu'à obtention de l'épaisseur souhaitée (ZD) de l'enveloppe cylindrique (11), qui est inférieure à 15% du diamètre extérieur (AD) de l'enveloppe cylindrique (11), les angles de fibre d'hélice (FWH, FWH1, FHW2, FHW3) de différentes couches hélicoïdales (H, H1, H2, H3) étant différents et augmentant de couche hélicoïdale (H, H1, H2, H3) en couche hélicoïdale (H, H1, H2, H3) dans le sens radial (RR) à mesure qu'augmente la distance par rapport à l'axe de rotation (R) ; et
(c) réticulation (V) du matériau composite fibreux du corps rotatif (11) et retrait (E) du corps d'enveloppement (4) du corps rotatif enveloppé et réticulé (11).

12. Procédé selon la revendication 11, les étapes d'enveloppement (UW) du corps d'enveloppement (4) avec des couches hélicoïdales (H) et des couches périphériques (U) en alternance comprenant en outre des étapes de préréticulation (W) après l'enveloppement (U) au moyen de respectivement une couche hélicoïdale (H) et/ou une couche périphérique (UW).
